(19) Europäisches Patentamt
European Patent Office
Office européen des brevets

(11) **EP 3 267 744 B1**

(12) **EUROPEAN PATENT SPECIFICATION**

(45) Date of publication and mention
of the grant of the patent:
**27.11.2019 Bulletin 2019/48**

(51) Int Cl.:
***H04W 68/02*** *(2009.01)*       ***H04W 36/00*** *(2009.01)*
***H04W 88/14*** *(2009.01)*       ***H04W 72/12*** *(2009.01)*
***H04W 76/27*** *(2018.01)*       ***H04W 52/02*** *(2009.01)*
***H04W 72/04*** *(2009.01)*

(21) Application number: **16761961.8**

(22) Date of filing: **07.03.2016**

(86) International application number:
**PCT/KR2016/002261**

(87) International publication number:
**WO 2016/144074 (15.09.2016 Gazette 2016/37)**

(54) **METHOD AND APPARATUS FOR REDUCING PAGING SIGNALING**

VERFAHREN UND VORRICHTUNG ZUR VERRINGERUNG VON PAGING-SIGNALISIERUNG

PROCÉDÉ ET APPAREIL DESTINÉS À RÉDUIRE UNE SIGNALISATION DE PAGING

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2015 US 201562129038 P**

(43) Date of publication of application:
**10.01.2018 Bulletin 2018/02**

(73) Proprietor: **LG Electronics Inc.
Yeongdeungpo-gu
Seoul 07336 (KR)**

(72) Inventors:
• **BYUN, Daewook
Seoul 06772 (KR)**
• **XU, Jian
Seoul 06772 (KR)**

(74) Representative: **Plasseraud IP
66, rue de la Chaussée d'Antin
75440 Paris Cedex 09 (FR)**

(56) References cited:
**JP-A- 2014 112 899       JP-A- 2014 112 899
KR-A- 20140 106 638       KR-A- 20150 000 808
KR-A-102014 001 159**

• **NTT DOCOMO ET AL: "Paging Optimization for the low mobility devices", 3GPP DRAFT; S2-143891_PAGINGOPTIMIZATION_DISCUSSION-R7 , 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Francisco; 20141117 - 20141121 17 November 2014 (2014-11-17), XP050881062, Retrieved from the Internet: URL:http://www.3gpp.org/ftp/Meetings_3GPP_SYNC/SA2/Docs/ [retrieved on 2014-11-17]**
• **ALCATEL-LUCENT ET AL: "Response paper to R3-150345 on paging optimisations", 3GPP DRAFT; R3-150354_PAGINGOPTIM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Athens, Greece; 20150209 - 20150213 8 February 2015 (2015-02-08), XP050937105, Retrieved from the Internet: URL:http://www.3gpp.org/ftp/Meetings_3GPP_SYNC/RAN3/Docs/ [retrieved on 2015-02-08]**

- SA2: "[DRAFT] LS on Paging Optimization", 3GPP DRAFT; S2-144426-DRAFT LS ON PAGING OPTIMIZATION-V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Francisco, USA; 20141117 - 20141121 22 November 2014 (2014-11-22), XP050923851, Retrieved from the Internet: URL:http://www.3gpp.org/ftp/tsg_sa/WG2_Arc h/TSGS2_106_San_Francisco/Docs/ [retrieved on 2014-11-22]
- VODAFONE: "Paging Load Reduction", 3GPP DRAFT;S2-144273 PAGING LOAD DISCUSS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Francisco; 20141117 - 20141121 17 November 2014 (2014-11-17), XP050895364, Retrieved from the Internet: URL:http://www.3gpp.org/ftp/Meetings_3GPP_ SYNC/SA2/Docs/ [retrieved on 2014-11-17]
- HUAWEI: "Response to R3-150345", 3GPP DRAFT; R3-150347 RESPONSE TO R3-150345, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Athens, Greece; 20150209 - 20150213 8 February 2015 (2015-02-08), XP050937098, Retrieved from the Internet: URL:http://www.3gpp.org/ftp/Meetings_3GPP_ SYNC/RAN3/Docs/ [retrieved on 2015-02-08] & SA2: "LS on Paging Optimization", 3GPP DRAFT; R3-150345_S2-150698, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Athens, Greece; 20150209 - 20150213 8 February 2015 (2015-02-08), XP050937447, Retrieved from the Internet: URL:http://www.3gpp.org/ftp/Meetings_3GPP_ SYNC/RAN3/LSin/ [retrieved on 2015-02-08]
- LG ELECTRONICS INC: "Discussion on paging optimization in small cell deployment", 3GPP DRAFT; R3-150513 DISCUSSION ON PAGING OPTIMIZATION IN SMALL CELL DEPLOYMENT, 3RD GENERATION PARTNERSHIP PROJECT (3GPP), MOBILE COMPETENCE CENTRE ; 650, ROUTE DES LUCIOLES ; F-06921 SOPHIA-ANTIPOL , vol. RAN WG3, no. Tenerife, Spain; 20150420 - 20150424 11 April 2015 (2015-04-11), XP050937131, Retrieved from the Internet: URL:http://www.3gpp.org/ftp/Meetings_3GPP_ SYNC/RAN3/Docs/ [retrieved on 2015-04-11]
- NEC: "Consideration of Paging Opimization", 3GPP DRAFT; R3-150600-PAGEOPT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Santa Cruz, Spain; 20150420 - 20150424 11 April 2015 (2015-04-11), XP050937218, Retrieved from the Internet: URL:http://www.3gpp.org/ftp/Meetings_3GPP_ SYNC/RAN3/Docs/ [retrieved on 2015-04-11]
- '3GPP; TSGRAN: Evolved Universal Terrestrial Radio Access Network (E-UTRAN); S1 Application Protocol (S1 AP ) (Release 12' 3GPP TS 36.413 V12.4,0 24 December 2014, XP050914005

**Description**

**BACKGROUND OF THE INVENTION**

Field of the invention

The present invention relates to a wireless communication system, and more particularly, to a method for reducing, by an MME and a base station, paging signaling and an apparatus for supporting the same.

Related Art

3GPP (3rd Generation Partnership Project) LTE (Long Term Evolution) that is an advancement of UMTS (Universal Mobile Telecommunication System) is being introduced with 3GPP release 8. In 3GPP LTE, OFDMA (orthogonal frequency division multiple access) is used for downlink, and SC-FDMA (single carrier-frequency division multiple access) is used for uplink. The 3GPP LTE adopts MIMO (multiple input multiple output) having maximum four antennas. Recently, a discussion of 3GPP LTE-A (LTE-Advanced) which is the evolution of the 3GPP LTE is in progress.
When a terminal does not receive traffic from a base station for a predetermined time, the terminal may transition to an RRC_IDLE state in order to save power. The terminal that transitions to an RRC_IDLE mode receives a broadcasting message (e.g., a paging message) broadcasted by the base station during an available interval (AI) to determine whether to transition to a normal mode or remain in the RRC IDLE state.
Paging represents a function to determine a location (e.g., a predetermined base station or a predetermined switching center) of a corresponding terminal when an incoming call is generated in mobile communication. Multiple base stations that support the RRC_IDLE state belong to a specific paging group to configure a paging area. In this case, the paging group represents a logical group. A purpose of the paging group is to provide a neighboring range area that may be paged downlink when there is traffic targeting the terminal.
The SA WG2 Temporary Documents S2-143891 and S2-144426 of November 2014 and the RAN WG3 Temporary Document R3-150354 of February 2015 discuss paging optimizations for load mobility devices.
Another method which allows for saving of system paging resources, by reducing signaling overhead, is disclosed in JP 2014-112899 A.

**SUMMARY OF THE INVENTION**

According to a paging procedure in the prior art, since a paging message is transmitted to multiple base stations which belong to multiple TAs, there is a disadvantage in that overhead of paging signaling is large. Further, according to a paging procedure that receives an ECGI of a neighboring cell and uses the received ECGI, which is proposed in the prior art, there is an issue in that paging failure may frequently occur with mobility of a terminal. Accordingly, the present invention provides a method for reducing the paging failure while reducing the overhead of the paging signaling and an apparatus for supporting the same.
The invention is set out in the appended claims.
The embodiments and or examples of the following description, which are not covered by the appended claims, are considered as not being part of the present invention.

**BRIEF DESCRIPTION OF THE DRAWINGS**

FIG. 1 shows LTE system architecture.
FIG. 2 shows a control plane of a radio interface protocol of an LTE system.
FIG. 3 shows a user plane of a radio interface protocol of an LTE system.
FIG. 4 shows a procedure in which UE that is initially powered on experiences a cell selection process, registers it with a network, and then performs cell reselection if necessary.
FIG. 5 shows an RRC connection establishment procedure.
FIG. 6 shows an RRC connection reconfiguration procedure.
FIG. 7 shows an RRC connection re-establishment procedure.
FIG. 8 shows an issue which may occur a paging procedure when an ECGI of a neighboring cell is provided to an MME.
FIG. 9 shows a method for providing a TAI list of a neighboring cell to the MME during an S1 release procedure according to an embodiment of the present invention.
FIG. 10 shows a method for providing a TAI list of a neighboring cell to the MME during an S1 release procedure according to an embodiment of the present invention.

FIG. 11 shows a method for providing the TAI list of the neighboring cell to the MME during a TAU procedure according to an embodiment of the present invention.

FIG. 12 is a block diagram illustrating a method for reducing, by an MME, paging signaling according to an embodiment of the present invention.

FIG. 13 is a block diagram illustrating a method for reducing, by a base station, paging signaling according to an embodiment of the present invention.

FIG. 14 is a block diagram illustrating a wireless communication system according to the embodiment of the present invention.

## DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

For clarity, the following description will focus on LTE-A. However, technical features of the present invention are not limited thereto.

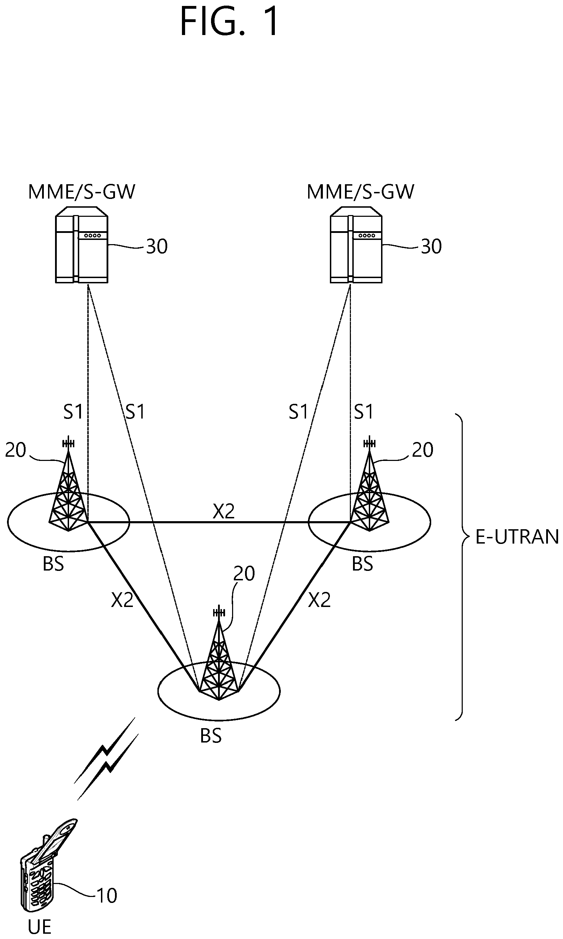

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), a base transceiver system (BTS), an access point, etc. One eNB 20 may be deployed per cell. There are one or more cells within the coverage of the eNB 20. A single cell is configured to have one of bandwidths selected from 1.25, 2.5, 5, 10, and 20 MHz, etc., and provides downlink or uplink transmission services to several UEs. In this case, different cells can be configured to provide different bandwidths.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) which is in charge of control plane functions, and a system architecture evolution (SAE) gateway (S-GW) which is in charge of user plane functions. The MME/S-GW 30 may be positioned at the end of the network and connected to an external network. The MME has UE access information or UE capability information, and such information may be primarily used in UE mobility management. The S-GW is a gateway of which an endpoint is an E-UTRAN. The MME/S-GW 30 provides an end point of a session and mobility management function for the UE 10. The EPC may further include a packet data network (PDN) gateway (PDN-GW). The PDN-GW is a gateway of which an endpoint is a PDN.

The MME provides various functions including non-access stratum (NAS) signaling to eNBs 20, NAS signaling security, access stratum (AS) security control, Inter core network (CN) node signaling for mobility between 3GPP access networks, idle mode UE reachability (including control and execution of paging retransmission), tracking area list management (for UE in idle and active mode), P-GW and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on APN-AMBR. For clarity MME/S-GW 30 will be referred to herein simply as a "gateway," but it is understood that this entity includes both the MME and S-GW.

Interfaces for transmitting user traffic or control traffic may be used. The UE 10 and the eNB 20 are connected by means of a Uu interface. The eNBs 20 are interconnected by means of an X2 interface. Neighboring eNBs may have a meshed network structure that has the X2 interface. The eNBs 20 are connected to the EPC by means of an S1 interface. The eNBs 20 are connected to the MME by means of an S1-MME interface, and are connected to the S-GW by means of S1-U interface. The S1 interface supports a many-to-many relation between the eNB 20 and the MME/S-GW.

The eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

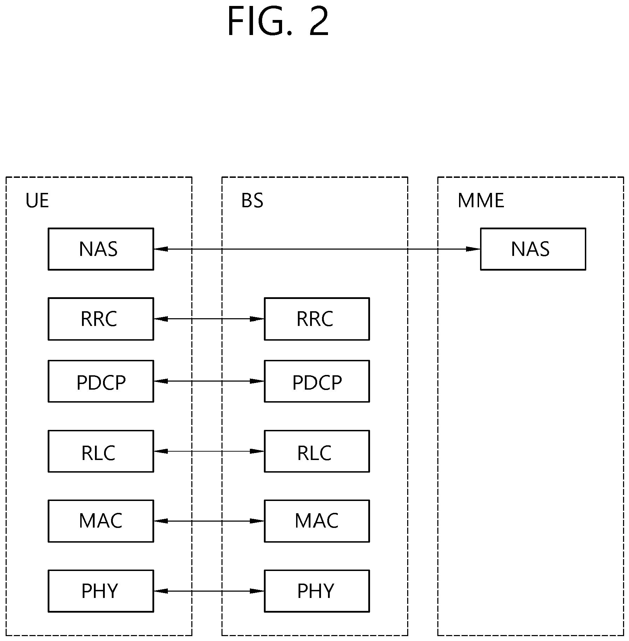

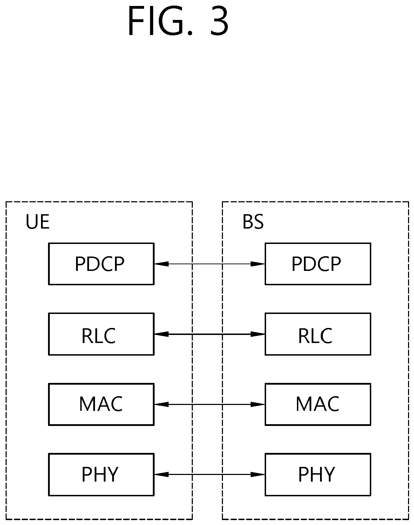

FIG. 2 shows a control plane of a radio interface protocol of an LTE system. FIG. 3 shows a user plane of a radio interface protocol of an LTE system.

Layers of a radio interface protocol between the UE and the E-UTRAN may be classified into a first layer (LI), a second layer (L2), and a third layer (L3) based on the lower three layers of the open system interconnection (OSI) model that is well-known in the communication system. The radio interface protocol between the UE and the E-UTRAN may be horizontally divided into a physical layer, a data link layer, and a network layer, and may be vertically divided into a control plane (C-plane) which is a protocol stack for control signal transmission and a user plane (U-plane) which is a protocol stack for data information transmission. The layers of the radio interface protocol exist in pairs at the UE and the E-UTRAN, and are in charge of data transmission of the Uu interface.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH may carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ acknowledgement (ACK)/non-acknowledgement (NACK) signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms.

The transport channel is classified into a common transport channel and a dedicated transport channel according to whether the channel is shared or not. A DL transport channel for transmitting data from the network to the UE includes a broadcast channel (BCH) for transmitting system information, a paging channel (PCH) for transmitting a paging message, a DL-SCH for transmitting user traffic or control signals, etc. The DL-SCH supports HARQ, dynamic link adaptation by varying the modulation, coding and transmit power, and both dynamic and semi-static resource allocation. The DL-SCH also may enable broadcast in the entire cell and the use of beamforming. The system information carries one or more system information blocks. All system information blocks may be transmitted with the same periodicity. Traffic or control signals of a multimedia broadcast/multicast service (MBMS) may be transmitted through the DL-SCH or a multicast channel (MCH).

A UL transport channel for transmitting data from the UE to the network includes a random access channel (RACH) for transmitting an initial control message, a UL-SCH for transmitting user traffic or control signals, etc. The UL-SCH supports HARQ and dynamic link adaptation by varying the transmit power and potentially modulation and coding. The UL-SCH also may enable the use of beamforming. The RACH is normally used for initial access to a cell.

A MAC layer belongs to the L2. The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. A MAC sublayer provides data transfer services on logical channels.

The logical channels are classified into control channels for transferring control plane information and traffic channels for transferring user plane information, according to a type of transmitted information. That is, a set of logical channel types is defined for different data transfer services offered by the MAC layer. The logical channels are located above the transport channel, and are mapped to the transport channels.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting MBMS control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RLC layer belongs to the L2. The RLC layer provides a function of adjusting a size of data, so as to be suitable for a lower layer to transmit the data, by concatenating and segmenting the data received from an upper layer in a radio section. In addition, to ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides a retransmission function through an automatic repeat request (ARQ) for reliable data transmission. Meanwhile, a function of the RLC layer may be implemented with a functional block inside the MAC layer. In this case, the RLC layer may not exist.

A packet data convergence protocol (PDCP) layer belongs to the L2. The PDCP layer provides a function of header compression function that reduces unnecessary control information such that data being transmitted by employing IP packets, such as IPv4 or IPv6, can be efficiently transmitted over a radio interface that has a relatively small bandwidth. The header compression increases transmission efficiency in the radio section by transmitting only necessary information in a header of the data. In addition, the PDCP layer provides a function of security. The function of security includes ciphering which prevents inspection of third parties, and integrity protection which prevents data manipulation of third parties.

A radio resource control (RRC) layer belongs to the L3. The RLC layer is located at the lowest portion of the L3, and is only defined in the control plane. The RRC layer takes a role of controlling a radio resource between the UE and the network. For this, the UE and the network exchange an RRC message through the RRC layer. The RRC layer controls logical channels, transport channels, and physical channels in relation to the configuration, reconfiguration, and release of RBs. An RB is a logical path provided by the L1 and L2 for data delivery between the UE and the network. That is, the RB signifies a service provided the L2 for data transmission between the UE and E-UTRAN. The configuration of the RB implies a process for specifying a radio protocol layer and channel properties to provide a particular service and for determining respective detailed parameters and operations. The RB is classified into two types, i.e., a signaling RB (SRB) and a data RB (DRB). The SRB is used as a path for transmitting an RRC message in the control plane. The DRB is used as a path for transmitting user data in the user plane.

A Non-Access Stratum (NAS) layer placed over the RRC layer performs functions, such as session management and mobility management.

Referring to FIG. 2, the RLC and MAC layers (terminated in the eNB on the network side) may perform functions such as scheduling, automatic repeat request (ARQ), and hybrid automatic repeat request (HARQ). The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

Referring to FIG. 3, the RLC and MAC layers (terminated in the eNB on the network side) may perform the same functions for the control plane. The PDCP layer (terminated in the eNB on the network side) may perform the user plane functions such as header compression, integrity protection, and ciphering.

Hereinafter, An RRC state of a UE and RRC connection procedure are described.

An RRC state indicates whether an RRC layer of the UE is logically connected to an RRC layer of the E-UTRAN. The RRC state may be divided into two different states such as an RRC connected state and an RRC idle state. When an RRC connection is established between the RRC layer of the UE and the RRC layer of the E-UTRAN, the UE is in RRC_CONNECTED, and otherwise the UE is in RRC_IDLE. Since the UE in RRC_CONNECTED has the RRC connection established with the E-UTRAN, the E-UTRAN may recognize the existence of the UE in RRC_CONNECTED and may effectively control the UE. Meanwhile, the UE in RRC_IDLE may not be recognized by the E-UTRAN, and a CN manages the UE in unit of a TA which is a larger area than a cell. That is, only the existence of the UE in RRC_IDLE is recognized in unit of a large area, and the UE must transition to RRC CONNECTED to receive a typical mobile communication service such as voice or data communication.

In RRC_IDLE state, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell reselection. Also, in RRC_IDLE state, no RRC context is stored in the eNB.

In RRC_CONNECTED state, the UE has an E-UTRAN RRC connection and a context in the E-UTRAN, such that transmitting and/or receiving data to/from the eNB becomes possible. Also, the UE can report channel quality information and feedback information to the eNB. In RRC CONNECTED state, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE state, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion.

A paging message is transmitted over all cells belonging to the same tracking area. If the UE moves from one TA to another TA, the UE will send a tracking area update (TAU) message to the network to update its location.

When the user initially powers on the UE, the UE first searches for a proper cell and then remains in RRC_IDLE in the cell. When there is a need to establish an RRC connection, the UE which remains in RRC_IDLE establishes the RRC connection with the RRC of the E-UTRAN through an RRC connection procedure and then may transition to RRC_CONNECTED. The UE which remains in RRC_IDLE may need to establish the RRC connection with the E-UTRAN when uplink data transmission is necessary due to a user's call attempt or the like or when there is a need to transmit a response message upon receiving a paging message from the E-UTRAN.

To manage mobility of the UE in the NAS layer, two states are defined, i.e., an EPS mobility management-REGISTERED (EMM-REGISTERED) state and an EMM-DEREGISTERED state. These two states apply to the UE and the MME. Initially, the UE is in the EMM-DEREGISTERED state. To access a network, the UE performs a process of registering to the network through an initial attach procedure. If the attach procedure is successfully performed, the UE and the MME enter the EMM-REGISTERED state.

To manage a signaling connection between the UE and the EPC, two states are defined, i.e., an EPS connection management (ECM)-IDLE state and an ECM-CONNECTED state. These two states apply to the UE and the MME. When the UE in the ECM-IDLE state establishes an RRC connection with the E-UTRAN, the UE enters the ECM-CONNECTED state. When the MME in the ECM-IDLE state establishes an S1 connection with the E-UTRAN, the MME enters the ECM-CONNECTED state. When the UE is in the ECM-IDLE state, the E-UTRAN does not have context information of the UE. Therefore, the UE in the ECM-IDLE state performs a UE-based mobility related procedure such as cell selection or reselection without having to receive a command of the network. On the other hand, when the UE is in the ECM-CONNECTED state, mobility of the UE is managed by the command of the network. If a location of the UE in the ECM-IDLE state becomes different from a location known to the network, the UE reports the location of the UE to the network through a tracking area update procedure.

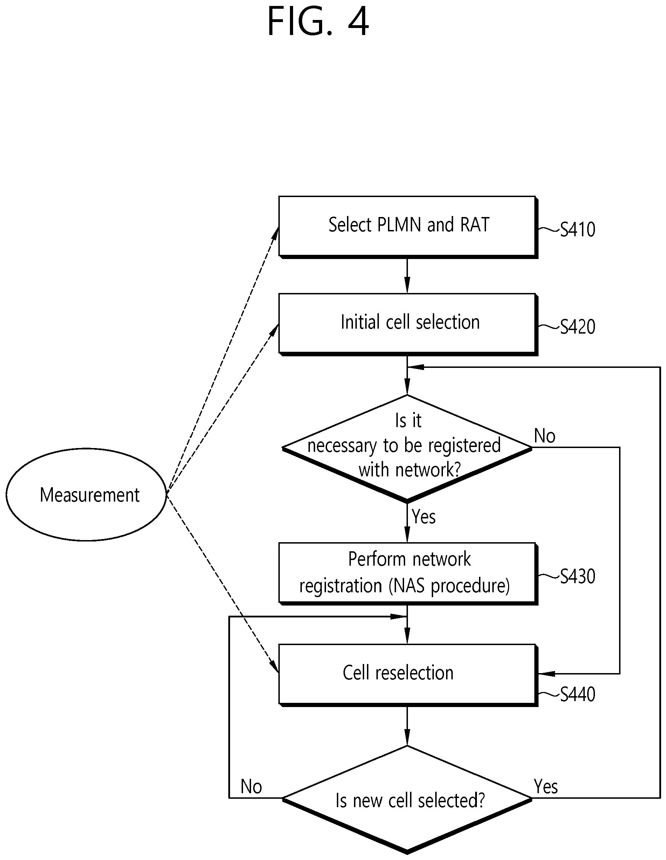

FIG. 4 shows a procedure in which UE that is initially powered on experiences a cell selection process, registers it with a network, and then performs cell reselection if necessary.

Referring to FIG. 4, the UE selects Radio Access Technology (RAT) in which the UE communicates with a Public Land Mobile Network (PLMN), that is, a network from which the UE is provided with service (S410). Information about the PLMN and the RAT may be selected by the user of the UE, and the information stored in a Universal Subscriber Identity Module (USIM) may be used.

The UE selects a cell that has the greatest value and that belongs to cells having measured BS and signal intensity or quality greater than a specific value (cell selection) (S420). In this case, the UE that is powered off performs cell selection, which may be called initial cell selection. A cell selection procedure is described later in detail. After the cell selection, the UE receives system information periodically by the BS. The specific value refers to a value that is defined in a system in order for the quality of a physical signal in data transmission/reception to be guaranteed. Accordingly, the specific value may differ depending on applied RAT.

If network registration is necessary, the UE performs a network registration procedure (S430). The UE registers its information (e.g., an IMSI) with the network in order to receive service (e.g., paging) from the network. The UE does not register it with a network whenever it selects a cell, but registers it with a network when information about the network (e.g., a Tracking Area Identity (TAI)) included in system information is different from information about the network that is known to the UE.

The UE performs cell reselection based on a service environment provided by the cell or the environment of the UE (S440). If the value of the intensity or quality of a signal measured based on a BS from which the UE is provided with service is lower than that measured based on a BS of a neighboring cell, the UE selects a cell that belongs to other cells and that provides better signal characteristics than the cell of the BS that is accessed by the UE. This process is called cell reselection differently from the initial cell selection of the No. 2 process. In this case, temporal restriction conditions are placed in order for a cell to be frequently reselected in response to a change of signal characteristic. A cell reselection procedure is described later in detail.

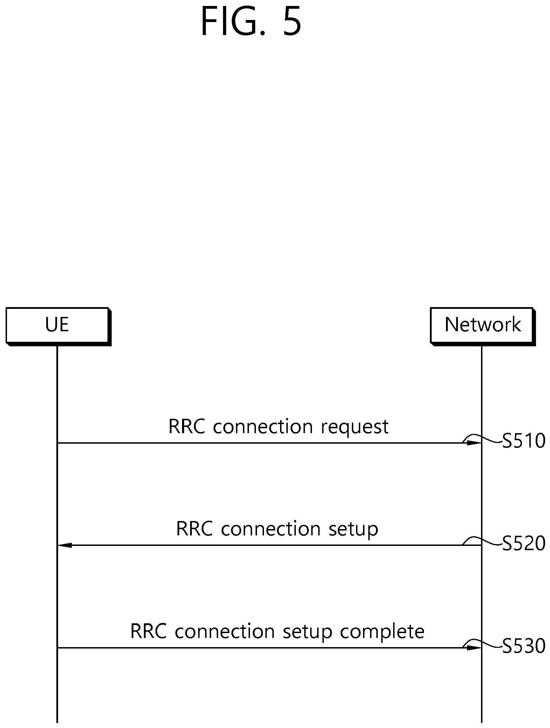

FIG. 5 shows an RRC connection establishment procedure.

The UE sends an RRC connection request message that requests RRC connection to a network (S510). The network sends an RRC connection establishment message as a response to the RRC connection request (S520). After receiving the RRC connection establishment message, the UE enters RRC connected mode.

The UE sends an RRC connection establishment complete message used to check the successful completion of the RRC connection to the network (S530).

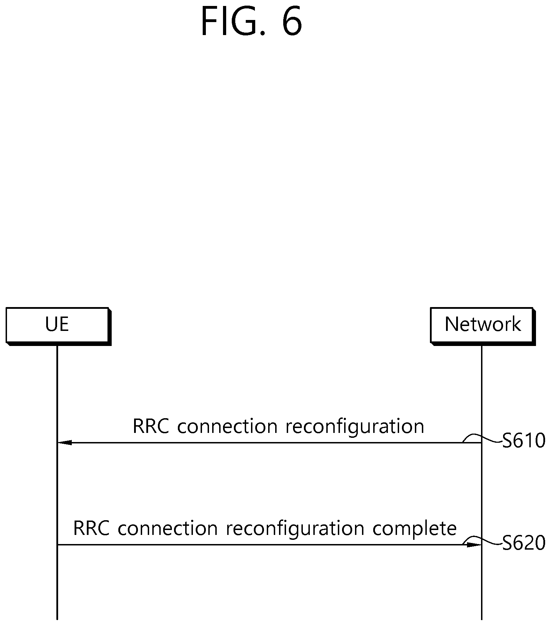

FIG. 6 shows an RRC connection reconfiguration procedure. An RRC connection reconfiguration is used to modify RRC connection. This is used to establish/modify/release RBs, perform handover, and set up/modify/release measurements.

A network sends an RRC connection reconfiguration message for modifying RRC connection to UE (S610). As a response to the RRC connection reconfiguration message, the UE sends an RRC connection reconfiguration complete message used to check the successful completion of the RRC connection reconfiguration to the network (S620).

The following is a detailed description of a procedure of selecting a cell by a terminal.

When power is turned-on or the terminal is located in a cell, the terminal performs procedures for receiving a service by selecting/reselecting a suitable quality cell.

A terminal in an RRC idle state should prepare to receive a service through the cell by always selecting a suitable quality cell. For example, a terminal where power is turned-on just before should select the suitable quality cell to be registered in a network. If the terminal in an RRC connection state enters in an RRC idle state, the terminal should selects a cell for stay in the RRC idle state. In this way, a procedure of selecting a cell satisfying a certain condition by the terminal in order to be in a service idle state such as the RRC idle state refers to cell selection. Since the cell selection is performed in a state that a cell in the RRC idle state is not currently determined, it is important to select the cell as rapid as possible. Accordingly, if the cell provides a wireless signal quality of a predetermined level or greater, although the cell does not provide the best wireless signal quality, the cell may be selected during a cell selection procedure of the terminal.

Hereinafter, a method and a procedure of selecting a cell by a terminal in a 3GPP LTE is described.

A cell selection process is basically divided into two types.

The first is an initial cell selection process. In this process, UE does not have preliminary information about a wireless channel. Accordingly, the UE searches for all wireless channels in order to find out a proper cell. The UE searches for the strongest cell in each channel. Thereafter, if the UE has only to search for a suitable cell that satisfies a cell selection criterion, the UE selects the corresponding cell.

Next, the UE may select the cell using stored information or using information broadcasted by the cell. Accordingly, cell selection may be fast compared to an initial cell selection process. If the UE has only to search for a cell that satisfies the cell selection criterion, the UE selects the corresponding cell. If a suitable cell that satisfies the cell selection criterion is not retrieved though such a process, the UE performs an initial cell selection process.

After the UE selects a specific cell through the cell selection process, the intensity or quality of a signal between the UE and a BS may be changed due to a change in the mobility or wireless environment of the UE. Accordingly, if the quality of the selected cell is deteriorated, the UE may select another cell that provides better quality. If a cell is reselected as described above, the UE selects a cell that provides better signal quality than the currently selected cell. Such a process is called cell reselection. In general, a basic object of the cell reselection process is to select a cell that provides UE with the best quality from a viewpoint of the quality of a radio signal.

In addition to the viewpoint of the quality of a radio signal, a network may determine priority corresponding to each frequency, and may inform the UE of the determined priorities. The UE that has received the priorities preferentially takes into consideration the priorities in a cell reselection process compared to a radio signal quality criterion.

As described above, there is a method of selecting or reselecting a cell according to the signal characteristics of a wireless environment. In selecting a cell for reselection when a cell is reselected, the following cell reselection methods may be present according to the RAT and frequency characteristics of the cell.

- Intra-frequency cell reselection: UE reselects a cell having the same center frequency as that of RAT, such as a cell on which the UE camps on.
- Inter-frequency cell reselection: UE reselects a cell having a different center frequency from that of RAT, such as a cell on which the UE camps on
- Inter-RAT cell reselection: UE reselects a cell that uses RAT different from RAT on which the UE camps

The principle of a cell reselection process is as follows.

First, UE measures the quality of a serving cell and neighbor cells for cell reselection.

Second, cell reselection is performed based on a cell reselection criterion. The cell reselection criterion has the following characteristics in relation to the measurements of a serving cell and neighbor cells.

Intra-frequency cell reselection is basically based on ranking. Ranking is a task for defining a criterion value for evaluating cell reselection and numbering cells using criterion values according to the size of the criterion values. A cell having the best criterion is commonly called the best-ranked cell. The cell criterion value is based on the value of a corresponding cell measured by UE, and may be a value to which a frequency offset or cell offset has been applied, if necessary.

Inter-frequency cell reselection is based on frequency priority provided by a network. UE attempts to camp on a frequency having the highest frequency priority. A network may provide frequency priority that will be applied by UEs within a cell in common through broadcasting signaling, or may provide frequency-specific priority to each UE through UE-dedicated signaling. A cell reselection priority provided through broadcast signaling may refer to a common priority. A cell reselection priority for each terminal set by a network may refer to a dedicated priority. If receiving the dedicated priority, the terminal may receive a valid time associated with the dedicated priority together. If receiving the dedicated priority, the terminal starts a validity timer set as the received valid time together therewith. While the valid timer is operated, the terminal applies the dedicated priority in the RRC idle mode. If the valid timer is expired, the terminal discards the dedicated priority and again applies the common priority.

For the inter-frequency cell reselection, a network may provide UE with a parameter (e.g., a frequency-specific offset) used in cell reselection for each frequency.

For the intra-frequency cell reselection or the inter-frequency cell reselection, a network may provide UE with a Neighboring Cell List (NCL) used in cell reselection. The NCL includes a cell-specific parameter (e.g., a cell-specific offset) used in cell reselection.

For the intra-frequency or inter-frequency cell reselection, a network may provide UE with a cell reselection black list used in cell reselection. The UE does not perform cell reselection on a cell included in the black list.

Ranking performed in a cell reselection evaluation process is described below.

A ranking criterion used to apply priority to a cell is defined as in Equation 1.

[Equation 1]

$$R_S = Q_{meas,s} + Q_{hyst,} \quad R_n = Q_{meas,n} - Q_{offset}$$

In this case, Rs is the ranking criterion of a serving cell, Rn is the ranking criterion of a neighbor cell, Qmeas,s is the quality value of the serving cell measured by UE, Qmeas,n is the quality value of the neighbor cell measured by UE, Qhyst is the hysteresis value for ranking, and Qoffset is an offset between the two cells.

In Intra-frequency, if UE receives an offset "Qoffsets,n" between a serving cell and a neighbor cell, Qoffset=Qoffsets,n. If UE does not Qoffsets,n, Qoffset=0.

In Inter-frequency, if UE receives an offset "Qoffsets,n" for a corresponding cell, Qoffset=Qoffsets,n+Qfrequency. If UE does not receive "Qoffsets,n", Qoffset=Qfrequency.

If the ranking criterion Rs of a serving cell and the ranking criterion Rn of a neighbor cell are changed in a similar state, ranking priority is frequency changed as a result of the change, and UE may alternately reselect the twos. Qhyst is a parameter that gives hysteresis to cell reselection so that UE is prevented from to alternately reselecting two cells.

UE measures RS of a serving cell and Rn of a neighbor cell according to the above equation, considers a cell having the greatest ranking criterion value to be the best-ranked cell, and reselects the cell. If a reselected cell is not a suitable cell, UE excludes a corresponding frequency or a corresponding cell from the subject of cell reselection.

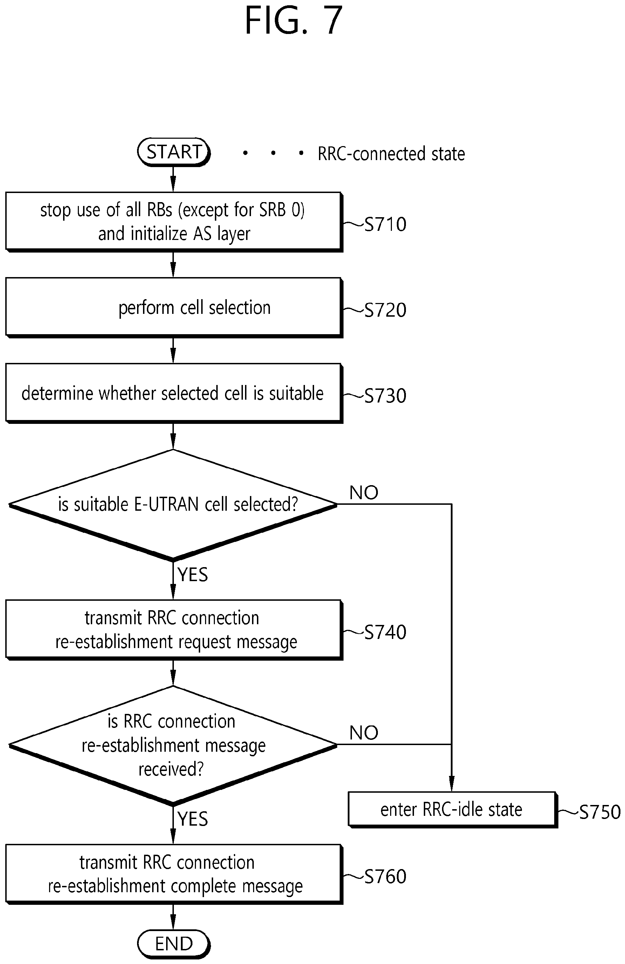

FIG. 7 shows an RRC connection re-establishment procedure.

Referring to FIG. 7, UE stops using all the radio bearers that have been configured other than a Signaling Radio Bearer (SRB) #0, and initializes a variety of kinds of sublayers of an Access Stratum (AS) (S710). Furthermore, the UE configures each sublayer and the PHY layer as a default configuration. In this procedure, the UE maintains the RRC connection state.

The UE performs a cell selection procedure for performing an RRC connection reconfiguration procedure (S720). The cell selection procedure of the RRC connection re-establishment procedure may be performed in the same manner as the cell selection procedure that is performed by the UE in the RRC idle state, although the UE maintains the RRC connection state.

After performing the cell selection procedure, the UE determines whether or not a corresponding cell is a suitable cell by checking the system information of the corresponding cell (S730). If the selected cell is determined to be a suitable E-UTRAN cell, the UE sends an RRC connection re-establishment request message to the corresponding cell (S740).

Meanwhile, if the selected cell is determined to be a cell that uses RAT different from that of the E-UTRAN through the cell selection procedure for performing the RRC connection re-establishment procedure, the UE stops the RRC connection re-establishment procedure and enters the RRC idle state (S750).

The UE may be implemented to finish checking whether the selected cell is a suitable cell through the cell selection procedure and the reception of the system information of the selected cell. To this end, the UE may drive a timer when the RRC connection re-establishment procedure is started. The timer may be stopped if it is determined that the UE has selected a suitable cell. If the timer expires, the UE may consider that the RRC connection re-establishment procedure has failed, and may enter the RRC idle state. Such a timer is hereinafter called an RLF timer. In LTE spec TS 36.331, a timer named "T311" may be used as an RLF timer. The UE may obtain the set value of the timer from the system information of the serving cell.

If an RRC connection re-establishment request message is received from the UE and the request is accepted, a cell sends an RRC connection re-establishment message to the UE.

The UE that has received the RRC connection re-establishment message from the cell reconfigures a PDCP sublayer and an RLC sublayer with an SRB1. Furthermore, the UE calculates various key values related to security setting, and reconfigures a PDCP sublayer responsible for security as the newly calculated security key values. Accordingly, the SRB 1 between the UE and the cell is open, and the UE and the cell may exchange RRC control messages. The UE completes the restart of the SRB1, and sends an RRC connection re-establishment complete message indicative of that the RRC connection re-establishment procedure has been completed to the cell (S760).

In contrast, if the RRC connection re-establishment request message is received from the UE and the request is not accepted, the cell sends an RRC connection re-establishment reject message to the UE.

If the RRC connection re-establishment procedure is successfully performed, the cell and the UE perform an RRC connection reconfiguration procedure. Accordingly, the UE recovers the state prior to the execution of the RRC connection re-establishment procedure, and the continuity of service is guaranteed to the upmost.

Hereinafter, a tacking area update (TAU) procedure will be described.

The UE in the RRC_IDLE state may not determined by the E-UTRAN. As a result, the location of the UE may be defined based on the tracking area (TA) which is a larger unit than the cell. That is, whether the UE in the RRC_IDLE state exists is determined for each TA and the UE needs to transition the RRC_IDLE state to the RRC_CONNECTED state. On the contrary, whether the UE in the RRC_CONNECTED state exists is determined for each cell. Each TA is distinguished through the tracking area identity (TAI) and the TAI may be configured to include a tracking area code (TAC) which is a value received by the UE through information broadcasted by the cell.

When the UE in the RRC_IDLE state moves to another TA which does not exist in the TAI list received from a core network or the timer for the periodic TAU expires, the UE in the RRC_IDLE state starts the TAU procedure in order to announce a current location thereof to the core network. For example, when the UE in the RRC_IDLE state moves to another TA, the UE (re)selects the cell and verifies the TAI of a new TA from system information broadcasted in the selected cell. Subsequently, when the TA of the new TA is not verified in the TAI list stored in the UE, the UE may know that the TA is changed. As a result, the UE starts the TAU procedure. When the TAU procedure is started, the UE transmits a TAU request message to the core network through the base station. The core network that receives the message serves to bring information on the UE from another core network.

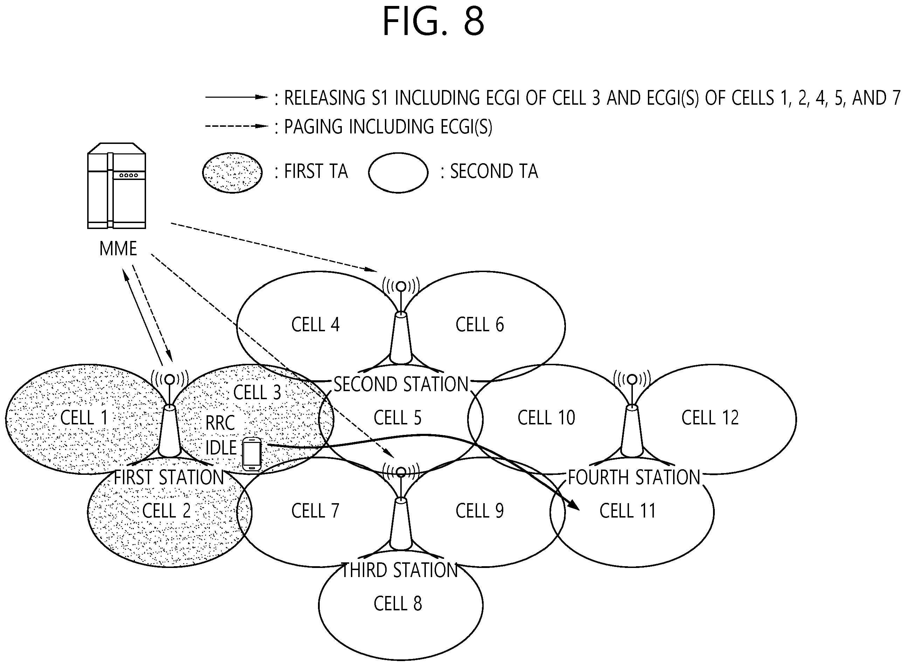

In order to reduce a paging load on the radio interface and reduce a load of the MME that sends paging to a lot of base stations, SA2 has discussed paging optimization. The reason is that when the paging message is transmitted to all base stations managed by the MME, larger overhead may occur. Therefore, the SA2 considers a method that performs paging only through a cell that operates in a frequency band supported by the UE in order to reduce the paging load. That is, since the MME including several cells and/or base stations takes charge of a plan of the paging, a method in which the base station transmits additional information to the MME is considered. In the prior art, proposed is a method in which the base station transmits the ECGI of the neighboring cell to which a current UE belongs to the MME, but an issue described below may occur. Hereinafter, referring to FIG. 8, the issue which may occur when the base station transmits the ECGI information of the neighboring to which the current UE belongs to the MME will be described.

FIG. 8 shows an issue which may occur a paging procedure when an ECGI of a neighboring cell is provided to an MME.

In order to reduce the paging signaling for the UE in the RRC_IDLE state, proposed is a method in which the base station to which the UE belongs provides the E-UTRAN cell global identifiers (ECGIs) of the cell to which the UE belongs and the neighboring cell of the cell to which the UE belongs to the MME. However, in the case of a moving device or a small cell, an issue described below may occur.

Referring to FIG. 8, it is assumed that a first base station belongs to a first TA and second to fourth base stations belong to a second TA. It is assumed that the current UE is in the RRC_IDLE state and the current UE has information on a second TAI corresponding to the second TA. According to the method that provides the ECGI of the neighboring cell to the MME, when the UE transmits the ECGI in the RRC_IDLE state, the first base station may transmit the ECGI of cell 3 and cells 1, 2, 4, 5, and 7 which are the neighboring cells of cell 3 to the MME by using an S1 release procedure. Thereafter, it is assumed that the UE maintains the RRC_IDLE state and moves to cell 11 which belongs to a fourth base station. When the MME initiates the paging procedure based on a list (that is, the ECGIs of cells 1, 2, 4, 5, and 7) of the ECGIs received from the first base station, the MME may transmit the paging message to the first to third base stations. That is, the paging message may not be transmitted to the fourth base station that controls cell 11 at which the current UE is positioned. Therefore, since the paging message is not transmitted to the fourth base station, the paging may be unsuccessful. As the paging is unsuccessful, a paging procedure in the prior art, which requires more paging signalling should be performed.

Further, unsuccessful paging may frequently occur according to a cell size. In the case of the small cell, when the paging procedure in the prior art is applied, more paging signalling may occur than other cases. The reason is that the size of the TAI list for the UE allocated by the MME may increase in order to allow the MME to know the location of the UE. The present invention proposes a method that provides the TAI list of the neighboring cell to which the UE currently belongs to the MME and performs the paging procedure based on the provided TAI list.

In the embodiment of FIG. 8, according to the method proposed by the present invention, when the TAI of the neighboring cell of the cell to which the UE currently belongs is provided to the MME, the MME may transmit the paging message to the second to fourth base stations based on the information on the second TA, and as a result, the paging may not be unsuccessful.

The paging procedure may include two steps. In a first step, when the UE transitions from RRC_CONNECTED to RRC_IDLE or triggers the TAU during the RRC_IDLE mode, the base station to which the UE belongs may announce information on the neighboring cell adjacent to the cell to which the UE currently belongs to the MME in order to reduce the paging signalling from the MME to the base station. The information on the neighboring cell may be TAI information of the neighboring cell. In a second step, the MME may perform the paging procedure based on the information provided in the first step.

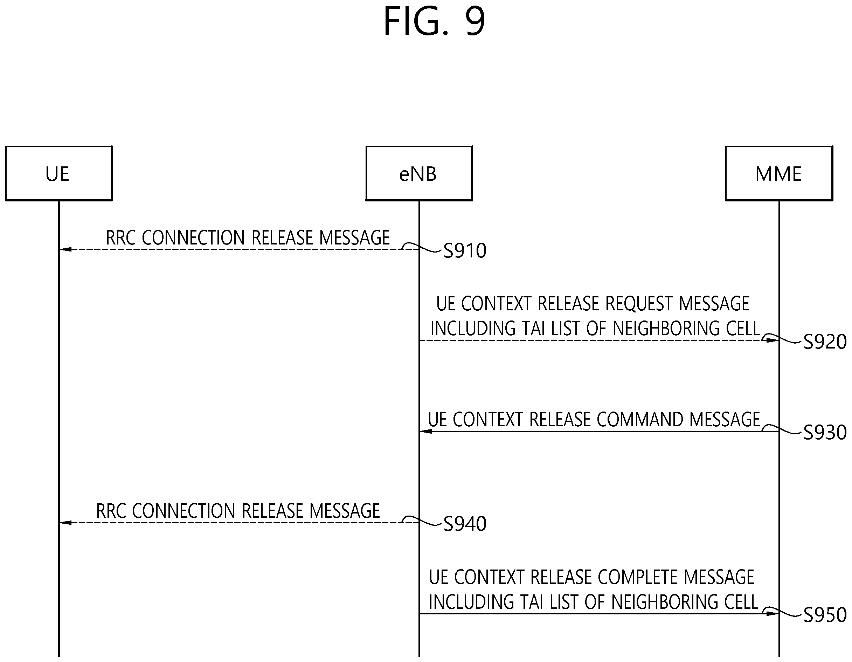

First, the first step will be described in detail with reference to FIGS. 9 to 11.

FIG. 9 shows a method for providing a TAI list of a neighboring cell to the MME during an S1 release procedure according to an embodiment of the present invention. In detail, FIG. 9 illustrates a method in which the base station provides the TAI list of the neighboring cell to the MME when the base station detects user deactivation, and the like and S1 release is thus triggered by the base station.

When the UE transitions to the RRC_IDLE mode, the base station may provide the TAI list of the neighboring cell to the MME by the following method.

The base station may release signalling connection of the UE (S910). The signalling connection release of the UE may be performed before requesting S1 context release to the MME. Alternatively, the signalling connection release of the UE may be performed simultaneously with requesting the S1 context release to the MME.

When the base station detects that release of the signaling connection of the UE and all radio bearers for the UE is required, the base station may transmit a UE CONTEXT RELEASE REQUEST message including the list of the TAI of the neighboring cell to the MME (S920). When the TAI of the cell to which the UE currently belongs is the same as the TAI of the neighboring cell, the TAI of the neighboring cell may not be included in the TAI list of the neighboring cell. That is, only when the TAI of the neighboring cell is different from the TAI of the cell to which the UE currently belongs, the TAI of the neighboring cell may be included in the TAI list of the neighboring cell. The MME may store the list of the TAI of the neighboring cell for subsequent paging.

The MME transmits a UE CONTEXT RELELASE COMMAND message to the base station to release S1 connection (S930).

**[0109]** When RRC connection is not already released, the base station may transmit an RRC CONNECTION RELELASE message to the UE in an acknowledge mode (S940). Once the message is acknowledged by the UE, the base station may delete a context of the UE.

**[0110]** The base station returns a UE CONTEXT RELEASE COMPLETE message including the list of the TAI of the neighboring cell to the MME to acknowledge the release of the S1 connection (S950). When the TAI of the cell to which the UE currently belongs is the same as the TAI of the neighboring cell, the TAI of the neighboring cell may not be included in the TAI list of the neighboring cell. That is, only when the TAI of the neighboring cell is different from the TAI of the cell to which the UE currently belongs, the TAI of the neighboring cell may be included in the TAI list of the neighboring cell. The MME may store the list of the TAI of the neighboring cell for the subsequent paging. That is, when information (IE) on the cell recommended and the base station recommended for the paging is included in the UE CONTEXT RELEASE COMPLETE message, the MME may store the information (IE) and use the stored information for the subsequent paging procedure.

**[0111]** The information included in the UE CONTEXT RELEASE COMPLETE message is shown in Table 1.

[Table 1]

| IE/Group Name | Presence | IE type and reference | Criticality | Assigned Criticality |
|---|---|---|---|---|
| Message Type | M | 9.2.1.1 | YES | reject |
| MME UE S1AP ID | M | 9.2.3.3 | YES | ignore |
| eNB UE SIAP ID | M | 9.2.3.4 | YES | ignore |
| Criticality Diagnostics | O | 9.2.1.21 | YES | ignore |
| User Location Information | O | 9.2.1.93 | YES | ignore |
| Information on Recommended Cells and eNBs for Paging | O | 9.2.1.x22 | YES | ignore |
| Cell Identifier and Coverage Enhancement Level | O | 9.2.1.x32 | YES | ignore |

**[0112]** Referring to Table 1, the information on the cell recommended and the information on the eNB recommended for the paging may be included in the UE CONTEXT RELEASE COMPLETE message.

**[0113]** The information on the cell recommended and the information on the base station recommended for the paging are shown in Table 2.

[Table 2]

| IE/Group Name | Presence | IE type and reference | Semantics description |
|---|---|---|---|
| Recommended Cells for Paging | M | 9.2.1.x23 | |
| Recommended eNBs for Paging | M | 9.2.1.x24 | |

**[0114]** Referring to Table 2, the information on the cell recommended for the paging may be the ECGI information of the neighboring cell. The information on the base station recommended for the paging may be the TAI list of the neighboring cell.

**[0115]** Information included in the information on the cell recommended for the paging is shown in Table 3.

[Table 3]

| IE/Group Name | Presence | IE type and reference | Semantics description |
|---|---|---|---|
| Recommended Cell List | | | |

(continued)

| IE/Group Name | Presence | IE type and reference | Semantics description |
|---|---|---|---|
| >Recommended Cell Item IEs | | | Includes visited and non-visited cells, where visited cells are listed in the order the UE visited them with the most recent cell being the first in the list. Non-visited cells are included after the visited cell they are associated with. |
| >>E-UTRAN CGI | M | 9.2.1.38 | |
| >>Time Stayed in Cell | O | INTEGER (0..4095) | |

Referring to Table 3, the list of recommended cells may include information on the cell which is not visited. That is, the list of the recommended cells may include the ECGI information of the neighboring cell.

The information on the base station recommended for the paging is shown in Table 4.

[Table 4]

| IE/Group Name | Presence | IE type and reference | Semantics description |
|---|---|---|---|
| Recommended eNB List | | | |
| > Recommended eNB Item IEs | | | Includes visited and non-visited eNBs, where visited eNBs are listed in the order the UE visited them with the most recent eNB being the first in the list. Non-visited eNBs are included after the visited eNB they are associated with. |
| >> Choice MME Paging Target | | | |
| >>> eNB | | | |
| >>>> Global eNB ID | M | | |
| >>> TAI | | | |
| >>>> TAI | M | | |

Referring to Table 4, the list of recommended base stations may include information on the base station which is not visited and the corresponding information may include a global base station ID and the TAI. That is, the list of the recommended base stations may include the TAI list of the neighboring cell.

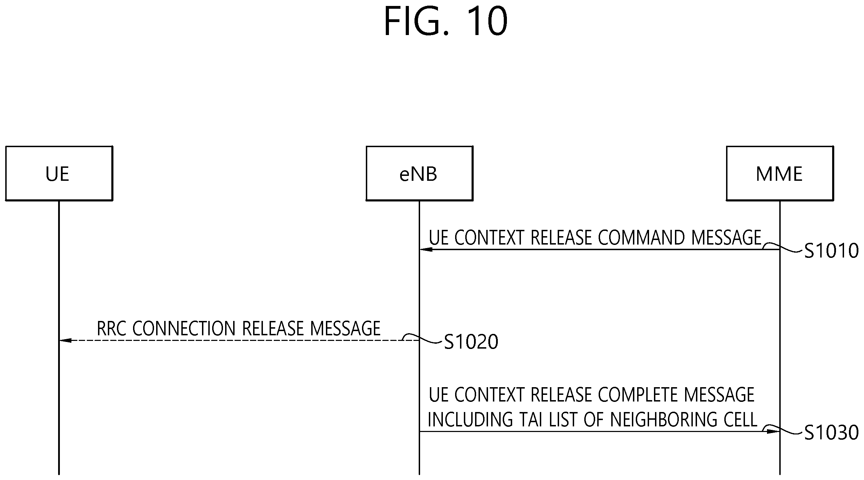

FIG. 10 shows a method for providing a TAI list of a neighboring cell to the MME during an S1 release procedure according to an embodiment of the present invention. In detail, FIG. 10 illustrates a method in which the base station provides the TAI list of the neighboring cell to the MME when the S1 release is triggered by the MME.

When the UE transitions to the RRC_IDLE mode, the base station may provide the TAI list of the neighboring cell to the MME by the following method.

The MME transmits the UE CONTEXT RELELASE COMMAND message to the base station to release the S1 connection (S1010).

When RRC connection is not already released, the base station may transmit the RRC CONNECTION RELELASE message to the UE in the acknowledge mode (S940). Once the message is acknowledged by the UE, the base station may delete the context of the UE.

The base station returns the UE CONTEXT RELEASE COMPLETE message including the list of the TAI of the neighboring cell to the MME to acknowledge the release of the S1 connection (S1030). When the TAI of the cell to which the UE currently belongs is the same as the TAI of the neighboring cell, the TAI of the neighboring cell may not be included in the TAI list of the neighboring cell. That is, only when the TAI of the neighboring cell is different from the TAI of the cell to which the UE currently belongs, the TAI of the neighboring cell may be included in the TAI list of the neighboring cell. The MME may store the list of the TAI of the neighboring cell for the subsequent paging. That is, when the information (IE) on the cell recommended and the base station recommended for the paging is included in the UE CONTEXT RELEASE COMPLETE message, the MME may store the information (IE) and use the stored information for the subsequent paging procedure. The information included in the UE CONTEXT RELEASE COMPLETE message, the information on the cell recommended and the information on the base station recommended for the paging, the information included in the information on the cell recommended for the paging, and the information included in the information on the base station recommended for the paging are described with reference to Tables 1 to 4, respectively.

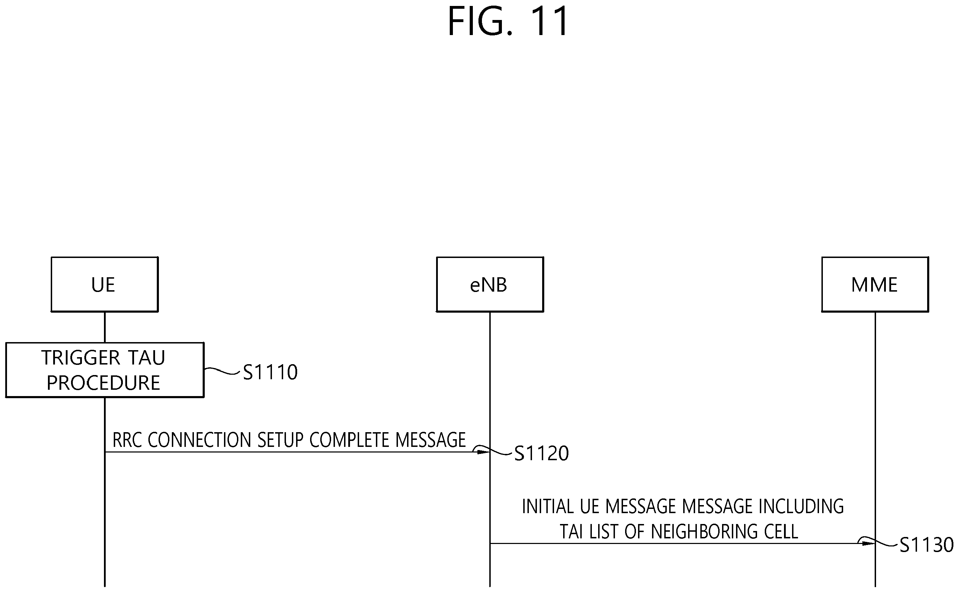

FIG. 11 shows a method for providing the TAI list of the neighboring cell to the MME during a TAU procedure according to an embodiment of the present invention. In detail, FIG. 11 shows a method in which the base station provides the TAI list of the neighboring cell to the MME when it is determined that a periodic TA update timer of the UE expires or the UE enters the new TA not included in the TAI list of the UE registered in the network.

When the periodic TA update timer of the UE expires, the UE may trigger the TAU procedure (S1110).

The UE may transmit an RRC CONNECTION SETUP COMPLETE message including a TAU request message together with an RRC parameter (S1120).

The base station may transmit an INITIAL UE MESSAGE message including the TAU request message and the TAI list of the neighboring cell (S1130). When the TAI of the cell to which the UE currently belongs is the same as the TAI of the neighboring cell, the TAI of the neighboring cell may not be included in the TAI list of the neighboring cell. That is, only when the TAI of the neighboring cell is different from the TAI of the cell to which the UE currently belongs, the TAI of the neighboring cell may be included in the TAI list of the neighboring cell. The MME may store the list of the TAI of the neighboring cell for the subsequent paging. That is, when the information (IE) on the cell recommended and the base station recommended for the paging is included in the INITIAL UE MESSAGE message, the MME may store the information (IE) and use the stored information for the subsequent paging procedure.

Next, the second step will be described in detail. According to the procedures proposed in FIGS. 9 to 11, the MME may receive the TAI list of the neighboring cell of the cell to which the UE currently belongs. In the subsequent paging procedure, the MME may transmit a paging message (alternatively, a new message) to the base station which belongs to the TA indicated by the TAI list of the neighboring cell. The paging message (alternatively, the new message) may include the TAI of the neighboring cell by using an existing IE or a new IE (alternatively, a new IE included in a new message).

According to the paging procedure in the prior art, since the paging message is transmitted to multiple base stations which belong to multiple TAs, there is a disadvantage in that the overhead of the paging signaling is large. Further, according to the paging procedure that receives the ECGI of the neighboring cell and uses the received ECGI, which is proposed in the prior art, there is an issue in that paging failure may frequently occur with mobility of the UE. According to the method proposed in the present invention, since the paging is performed based on the TAI of the neighboring cell, the overhead of the paging signalling may be reduced and the paging failure with the mobility of the UE may be reduced.

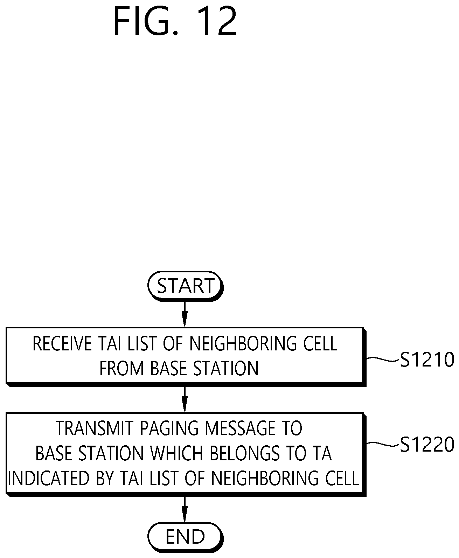

FIG. 12 is a block diagram illustrating a method for reducing, by an MME, paging signaling according to an embodiment of the present invention.

Referring to FIG. 12, the MME may receive the TAI list of the neighboring cell from the base station (S1210). The neighboring cell may be a cell adjacent to the cell to which the UE belongs. The TAI list of the neighboring cell may be received when the TAI of the cell to which the UE belongs and the TAI of the neighboring cell are different from each other. The UE may be in the RRC_IDLE state.

The TAI list of the neighboring cell may be received while being included in a UE CONTEXT RELEASE REQUEST message. The TAI list of the neighboring cell may be received while being included in a UE CONTEXT RELEASE COMPLETE message and the UE CONTEXT RELEASE COMPLETE message may be received as a response to a UE CONTEXT RELEASE COMMAND message. The UE CONTEXT RELEASE REQUEST message, the UE CONTEXT RELEASE COMMAND message, or the UE CONTEXT RELEASE COMPLETE message may be a message transmitted in an S1 release procedure.

The TAI list of the neighboring cell may be received while being included in an INITIAL UE MESSAGE message and the INITIAL UE MESSAGE message may be received after receiving an RRC CONNECTION SETUP COMPLETE message. The RRC CONNECTION SETUP COMPLETE message or INITIAL UE MESSAGE message may be a message transmitted during a TAU procedure.

The MME may transmit a paging message to the base station which belongs to the TA indicated by the TAI list of the neighboring cell (S1220). To this end, the MME may store the TAI list of the neighboring cell.

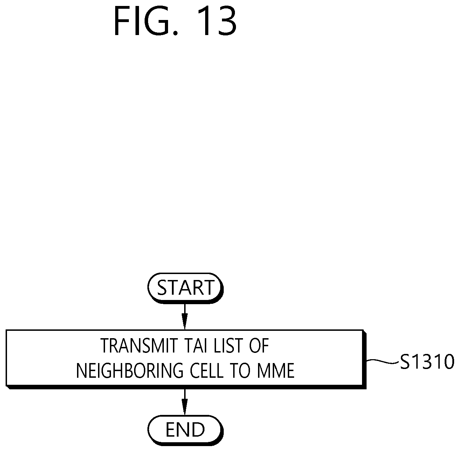

FIG. 13 is a block diagram illustrating a method for reducing, by a base station, paging signaling according to an embodiment of the present invention.

Referring to FIG. 13, the base station may transmit the TAI list of the neighboring cell to the MME (S1310). The neighboring cell may be a cell adjacent to the cell to which the UE belongs. The TAI list of the neighboring cell may be received when the TAI of the cell to which the UE belongs and the TAI of the neighboring cell are different from each other. The UE may be in the RRC_IDLE state.

The base station may receive the UE CONTEXT RELEASE COMMAND message from the MME. The TAI list of the neighboring cell may be transmitted while being included in a UE CONTEXT RELEASE COMPLETE message and the UE CONTEXT RELEASE COMPLETE message may be transmitted as the response to the UE CONTEXT RELEASE COMMAND message.

The base station may receive an RRC CONNECTION SETUP COMPLETE message from the UE. The TAI list of the neighboring cell may be transmitted while being included in the INITIAL UE MESSAGE message and the INITIAL UE MESSAGE message may be transmitted after receiving an RRC CONNECTION SETUP COMPLETE message.

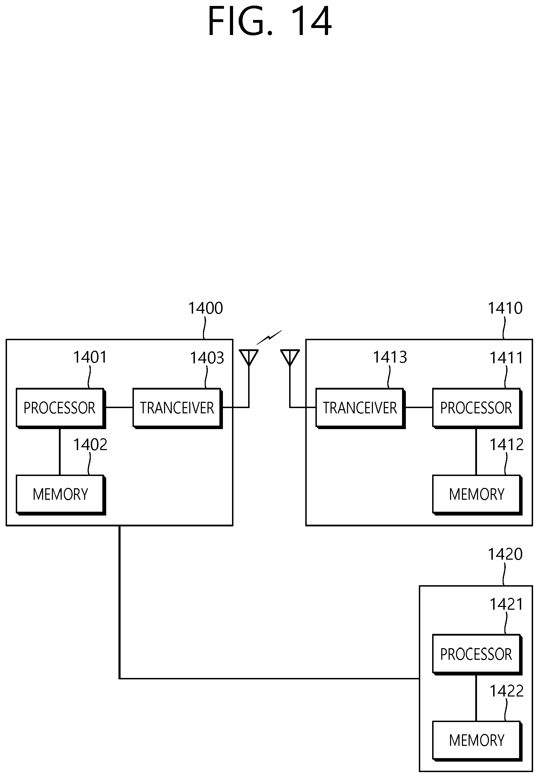

FIG. 14 is a block diagram illustrating a wireless communication system according to the embodiment of the present invention.

A BS 1400 includes a processor 1401, a memory 1402 and a transceiver 1403. The memory 1402 is connected to the processor 1401, and stores various information for driving the processor 1401. The transceiver 1403 is connected to the processor 1401, and transmits and/or receives radio signals. The processor 1401 implements proposed functions, processes and/or methods. In the above embodiment, an operation of the base station may be implemented by the processor 1401.

A UE 1410 includes a processor 1411, a memory 1412 and a transceiver 1413. The memory 1412 is connected to the processor 1411, and stores various information for driving the processor 1411. The transceiver 1413 is connected to the processor 1411, and transmits and/or receives radio signals. The processor 1411 implements proposed functions, processes and/or methods. In the above embodiment, an operation of the UE may be implemented by the processor 1411.

An MME 1420 includes a processor 1421 and a memory 1422. The memory 1422 is connected to the processor 1421, and stores various information for driving the processor 1421. The processor 1421 implements proposed functions, processes and/or methods. In the above embodiment, an operation of the MME may be implemented by the processor 1421.

The processor may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The transceiver may include a base-band circuit for processing a wireless signal. When the embodiment is implemented in software, the aforementioned methods can be implemented with a module (i.e., process, function, etc.) for performing the aforementioned functions. The module may be stored in the memory and may be performed by the processor. The memory may be located inside or outside the processor, and may be coupled to the processor by using various well-known means.

Various methods based on the present specification have been described by referring to drawings and reference numerals given in the drawings on the basis of the aforementioned examples. Although each method describes multiple steps or blocks in a specific order for convenience of explanation, the invention disclosed in the claims is not limited to the order of the steps or blocks, and each step or block can be implemented in a different order, or can be performed simultaneously with other steps or blocks. In addition, those ordinarily skilled in the art can know that the invention is not limited to each of the steps or blocks, and at least one different step can be added or deleted without departing from the scope of the invention.

The aforementioned embodiment includes various examples. It should be noted that those ordinarily skilled in the art know that all possible combinations of examples cannot be explained, and also know that various combinations can be derived from the technique of the present specification. Therefore, the protection scope of the invention should be determined by combining various examples described in the detailed explanation, without departing from the scope of the following claims.

## Claims

1. A method executed by a mobility management entity, MME (30), for transmitting, by the MME, a paging message in a wireless communication system, the method comprising:

     transmitting (S930, S1010) a UE context release command message, to a first base station (20), wherein the first base station manages a cell to which a user equipment, UE, (10) in RRC_IDLE state belongs;
     receiving (S950, S1030, S1210) a UE context release complete message including a list of tracking area identity, TAI, of at least one neighboring cell adjacent to the cell, from the first base station (20), in response to the UE context release command message; and
     transmitting (S1120) the paging message to at least one second base station which belongs to a tracking area included in the list of TAI included in the UE context release complete message.

2. The method of claim 1, further comprising:

storing the list of TAI of the at least one neighboring cell.

3. The method of claim 1, wherein the list of TAI of the at least one neighboring cell is received when a TAI of the cell to which the UE (10) belongs is different from the TAI of the at least one neighboring cell.

4. The method of claim 1, further comprising:
transmitting the paging message to the first base station (20).

5. A method executed by a base station, BS (20), in a wireless communication system, the BS managing a cell to which a user equipment, UE (10), in RRC_IDLE state belongs, for transmitting a list of tracking are identity, TAI, of at least one neighboring cell adjacent to the cell, the method comprising:

receiving (S930, S1010) a UE context release command message, from a mobility management entity, MME, (30);
transmitting (S950, S1030, S1220) a UE context release complete message including the list of TAI of at least one neighboring cell adjacent to the cell, to the MME (30), in response to the UE context release command message.

6. The method of claim 5, wherein the list of TAI of the at least one neighboring cell is transmitted when a TAI of the cell to which the UE (10) belongs is different from the TAI of the at least one neighboring cell.

7. A mobility management entity, MME, for transmitting a paging message in a wireless communication system, the MME (30, 1420) comprising:

a memory (1422);
a transceiver; and
a processor (1421), operatively coupled to the memory and the transceiver, that:

controls the transceiver to transmit a UE context release command message, to a first base station (20, 1400), wherein the first base station manages a cell to which a user equipment, UE, (10, 1410) in RRC_IDLE state belongs;
controls the transceiver to receive a UE context release complete message including a list of tracking area identity, TAI, of at least one neighboring cell adjacent to the cell, from the first base station (20, 1400), in response to the UE context release command message; and
controls the transceiver to transmit the paging message to at least one base station which belongs to a tracking area indicated by the list of TAI included in the UE context release complete message.

8. The MME of claim 7, the processor (1421) stores the list of TAI of the at least one neighboring cell.

9. The MME of claim 7, wherein the list of TAI of the at least one neighboring cell is received when a TAI of the cell to which the UE (10, 1410) belongs is different from the TAI of the at least one neighboring cell.

**Patentansprüche**

1. Verfahren, das durch eine Mobility Management Entity, MME, (30) ausgeführt wird, zum Übertragen einer Paging-Nachricht in einem Drahtloskommunikationssystem durch die MME, wobei das Verfahren die Schritte aufweist:

Übertragen (S930, S1010) einer UE-Kontextfreigabebefehlsnachricht an eine erste Basisstation (20), wobei die erste Basisstation eine Zelle verwaltet, der ein Benutzergerät, UE, (10) im RRC_IDLE-Zustand zugehörig ist;
Empfangen (S950, S1030, S1210) einer UE-Kontextfreigabeabschlussnachricht, die eine TAI-, Tracking Area Identity, Liste mindestens einer Nachbarzelle enthält, die der Zelle benachbart ist, von der ersten Basisstation (20) in Antwort auf die UE-Kontextfreigabebefehlsnachricht; und
Übertragen (S1120) der Paging-Nachricht an mindestens eine zweite Basisstation, die einem Tracking Area zugehörig ist, der in der TAI-Liste enthalten ist, die in der UE-Kontextfreigabeabschlussnachricht enthalten ist.

2. Verfahren nach Anspruch 1, ferner mit dem Speichern der TAI-Liste der mindestens einen Nachbarzelle.

3. Verfahren nach Anspruch 1, wobei die TAI-Liste der mindestens einen Nachbarzelle empfangen wird, wenn sich eine TAI der Zelle, der das UE (10) zugehörig ist, von der TAI der mindestens einen Nachbarzelle unterscheidet.

4. Verfahren nach Anspruch 1, ferner mit dem Übertragen der Paging-Nachricht an die erste Basisstation (20).

5. Verfahren, das durch eine Basisstation, BS, (20) in einem Drahtloskommunikationssystem ausgeführt wird, wobei die BS eine Zelle verwaltet, der ein Benutzergerät, UE, (10) im RRC_IDLE-Zustand zugehörig ist, zum Übertragen einer TAI-, Tracking Area Identity, Liste mindestens einer Nachbarzelle, die der Zelle benachbart ist, wobei das Verfahren die Schritte aufweist:

   Empfangen (S930, S1010) einer UE-Kontextfreigabebefehlsnachricht von einer Mobility Management Entity, MME, (30); und
   Übertragen (S950, S1030, S1220) einer UE-Kontextfreigabeabschlussnachricht, die die TAI-Liste mindestens einer Nachbarzelle enthält, die der Zelle benachbart ist, an die MME (30) in Antwort auf die UE-Kontextfreigabebefehlsnachricht.

6. Verfahren nach Anspruch 5, wobei die TAI-Liste der mindestens einen Nachbarzelle übertragen wird, wenn sich eine TAI der Zelle, der das UE (10) zugehörig ist, von der TAI der mindestens einen Nachbarzelle unterscheidet.

7. Mobility Management Entity, MME, zum Übertragen einer Paging-Nachricht in einem Drahtloskommunikationssystem, wobei die MME (30, 1420) aufweist:

   einen Speicher (1422);
   einen Transceiver; und
   einen Prozessor (1421), der betrieblich mit dem Speicher und dem Transceiver verbunden ist und
   den Transceiver steuert, um eine UE-Kontextfreigabebefehlsnachricht an eine erste Basisstation (20, 1400) zu übertragen, wobei die erste Basisstation eine Zelle verwaltet, der ein Benutzergerät, UE, (10, 1410) im RRC_IDLE-Zustand zugehörig ist;
   den Transceiver steuert, um eine UE-Kontextfreigabeabschlussnachricht, die eine TAI-Liste mindestens einer Nachbarzelle enthält, die der Zelle benachbart ist, von der ersten Basisstation (20, 1400) in Antwort auf die UE-Kontextfreigabebefehlsnachricht zu empfangen; und
   den Transceiver steuert, um die Paging-Nachricht an mindestens eine Basisstation zu übertragen, die einem Tracking Area zugehörig ist, der durch die in der UE-Kontextfreigabeabschlussnachricht enthaltene TAI-Liste angezeigt wird.

8. MME nach Anspruch 7, wobei der Prozessor (1421) die TAI-Liste mindestens einer Nachbarzelle speichert.

9. MME nach Anspruch 7, wobei die TAI-Liste der mindestens einen Nachbarzelle empfangen wird, wenn sich eine TAI der Zelle, der das UE (10, 1410) zugehörig ist, von der TAI der mindestens einen Nachbarzelle unterscheidet.

**Revendications**

1. Procédé exécuté par une entité de gestion de mobilité, MME (« mobility management entity ») (30), pour transmettre, par la MME, un message de radiomessagerie dans un système de communication sans fil, le procédé comprenant :

   émettre (S930, S1010) un message d'instruction de libération de contexte d'UE, vers une première station de base (20), la première station de base gérant une cellule à laquelle appartient un équipement d'utilisateur, UE (« user equipment »), (10) à l'état RRC_IDLE ;
   recevoir (S950, S1030, S1210) un message de libération de contexte d'UE achevée incluant une liste d'identités de zone de suivi, TAI (« tracking area identity »), d'au moins une cellule voisine adjacente à la cellule, en provenance de la première station de base (20), en réponse au message d'instruction de libération de contexte d'UE ; et
   émettre (S1120) le message de radiomessagerie vers au moins une seconde station de base qui appartient à une zone de suivi incluse dans la liste de TAI incluse dans le message de libération de contexte d'UE achevée.

2. Procédé selon la revendication 1, comprenant en outre :
   mémoriser la liste de TAI de l'au moins une cellule voisine.

**3.** Procédé selon la revendication 1, dans lequel la liste de TAI de l'au moins une cellule voisine est reçue lorsqu'une TAI de la cellule à laquelle appartient l'UE (10) est différente de la TAI de l'au moins une cellule voisine.

**4.** Procédé selon la revendication 1, comprenant en outre :
émettre le message de radiomessagerie vers la première station de base (20).

**5.** Procédé exécuté par une station de base, BS (« base station ») (20), dans un système de communication sans fil, la BS gérant une cellule à laquelle appartient un équipement d'utilisateur, UE (« user equipment ») (10), à l'état RRC_IDLE, pour émettre une liste d'identités de zone de suivi, TAI (« tracking area identity »), d'au moins une cellule voisine adjacente à la cellule, le procédé comprenant :

recevoir (S930, S1010) un message d'instruction de libération de contexte d'UE, à partir d'une entité de gestion de mobilité, MME (« mobility management entity »), (30) ;
émettre (S950, S1030, S1220) un message de libération de contexte d'UE achevée incluant la liste de TAI d'au moins une cellule voisine adjacente à la cellule, vers la MME (30), en réponse au message d'instruction de libération de contexte d'UE.

**6.** Procédé selon la revendication 5, dans lequel la liste de TAI de l'au moins une cellule voisine est émise lorsqu'une TAI de la cellule à laquelle appartient l'UE (10) est différente de la TAI de l'au moins une cellule voisine.

**7.** Entité de gestion de mobilité, MME (« mobility management entity »), pour émettre un message de radiomessagerie dans un système de communication sans fil, la MME (30, 1420) comprenant :

une mémoire (1422) ;
un émetteur-récepteur ; et
un processeur (1421), fonctionnellement couplé à la mémoire et à l'émetteur-récepteur, qui :

commande l'émetteur-récepteur pour émettre un message d'instruction de libération de contexte d'UE vers une première station de base (20, 1400), la première station de base gérant une cellule à laquelle appartient un équipement d'utilisateur, UE (« user equipment »), (10, 1410) à l'état RRC_IDLE;
commande l'émetteur-récepteur pour recevoir un message de libération de contexte d'UE achevée incluant une liste d'identités de zone de suivi, TAI (« tracking area identity »), d'au moins une cellule voisine adjacente à la cellule, en provenance de la première station de base (20, 1400), en réponse au message d'instruction de libération de contexte d'UE ; et
commande l'émetteur-récepteur pour émettre le message de radiomessagerie vers au moins une station de base qui appartient à une zone de suivi indiquée par la liste de TAI incluse dans le message de libération de contexte d'UE achevée.

**8.** MME selon la revendication 7, dans laquelle le processeur (1421) mémorise la liste de TAI de l'au moins une cellule voisine.

**9.** MME selon la revendication 7, dans laquelle la liste de TAI de l'au moins une cellule voisine est reçue lorsqu'une TAI de la cellule à laquelle appartient l'UE (10, 1410) est différente de la TAI de l'au moins une cellule voisine.

# FIG. 1

# FIG. 2

# FIG. 3

# FIG. 4

Select PLMN and RAT — S410

Initial cell selection — S420

Is it necessary to be registered with network? — No / Yes

Perform network registration (NAS procedure) — S430

Cell reselection — S440

Is new cell selected? — No / Yes

Measurement

# FIG. 5

```
UE                                              Network
 |                                                 |
 |            RRC connection request               |
 |------------------------------------------------>| S510
 |                                                 |
 |            RRC connection setup                 |
 |<------------------------------------------------| S520
 |                                                 |
 |        RRC connection setup complete            |
 |------------------------------------------------>| S530
 |                                                 |
```

# FIG. 6

# FIG. 7

START · · · · RRC-connected state

stop use of all RBs (except for SRB 0) and initialize AS layer ~S710

perform cell selection ~S720

determine whether selected cell is suitable ~S730

is suitable E-UTRAN cell selected? —— NO

YES

transmit RRC connection re-establishment request message ~S740

is RRC connection re-establishment message received? —— NO

YES

enter RRC-idle state ~S750

transmit RRC connection re-establishment complete message ~S760

END

# FIG. 8

→ : RELEASING S1 INCLUDING ECGI OF CELL 3 AND ECGI(S) OF CELLS 1, 2, 4, 5, AND 7

------→ : PAGING INCLUDING ECGI(S)

▨ : FIRST TA ⬭ : SECOND TA

MME

CELL 4  CELL 6

SECOND STATION

CELL 1  CELL 3  CELL 5  CELL 10  CELL 12

RRC
IDLE

FIRST STATION  FOURTH STATION

CELL 2  CELL 7  CELL 9  CELL 11

THIRD STATION

CELL 8

EP 3 267 744 B1

# FIG. 9

UE       eNB       MME

RRC CONNECTION RELEASE MESSAGE — S910

UE CONTEXT RELEASE REQUEST MESSAGE
INCLUDING TAI LIST OF NEIGHBORING CELL — S920

UE CONTEXT RELEASE COMMAND MESSAGE — S930

RRC CONNECTION RELEASE MESSAGE — S940

UE CONTEXT RELEASE COMPLETE MESSAGE
INCLUDING TAI LIST OF NEIGHBORING CELL — S950

EP 3 267 744 B1

# FIG. 10

UE CONTEXT RELEASE COMMAND MESSAGE ~S1010

RRC CONNECTION RELEASE MESSAGE ~S1020

UE CONTEXT RELEASE COMPLETE MESSAGE
INCLUDING TAI LIST OF NEIGHBORING CELL ~S1030

EP 3 267 744 B1

## FIG. 11

UE — eNB — MME

S1110 TRIGGER TAU PROCEDURE

S1120 RRC CONNECTION SETUP COMPLETE MESSAGE

S1130 INITIAL UE MESSAGE MESSAGE INCLUDING TAI LIST OF NEIGHBORING CELL

# FIG. 12

```
            ( START )
                |
                v
+-----------------------------------+
|  RECEIVE TAI LIST OF NEIGHBORING CELL |----- S1210
|         FROM BASE STATION         |
+-----------------------------------+
                |
                v
+-----------------------------------+
|     TRANSMIT PAGING MESSAGE TO     |
|  BASE STATION WHICH BELONGS TO TA  |----- S1220
| INDICATED BY TAI LIST OF NEIGHBORING CELL |
+-----------------------------------+
                |
                v
             ( END )
```

# FIG. 13

```
        ┌─────────┐
        │  START  │
        └────┬────┘
             │
             ▼
┌────────────────────────────┐
│      TRANSMIT TAI LIST OF   │────S1310
│   NEIGHBORING CELL TO MME   │
└────────────┬───────────────┘
             │
             ▼
        ┌─────────┐
        │   END   │
        └─────────┘
```

# FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014112899 A